# EUROPEAN PATENT SPECIFICATION

(11) **EP 0 507 413 B1**
(45) Date of publication and mention of the grant of the patent: **15.02.1995**
(21) Application number: 92200929.5
(22) Date of filing: 01.04.1992
(51) Int. Cl.: B65G 47/84

(54) **Distributing conveyor**
Verteilerförderer
Convoyeur de distribution

(30) Priority: 02.04.1991 NL 9100562
(43) Date of publication of application: 07.10.1992
(73) Proprietor: VANDERLANDE INDUSTRIES NEDERLAND B.V., NL-5466 RB Veghel (NL)
(72) Inventor: van den Goor, Jakobus Marie, NL-5674 SH Nuenen (NL)
(74) Representative: Vollebregt, Cornelis Jacobus, Ir.

(56) References cited:
- EP-A- 0 084 905

## Description

The invention relates to a conveyor provided with a frame and with an endless drivable conveying means equipped with parallel carriers extending transversely to the direction of movement of the conveying means, said carriers being pivotally coupled to at least one endless flexible coupling means, at least some of the carriers supporting push-off members, which can be moved along the carriers in question, the conveyor being also provided with guide means for the push-off members, by means of which it is effected that at the upstream end of the conveying means the push-off members are disposed near the centre of the conveying means, whilst upstream and near discharge stations guide means are provided co-operating with cam means mounted on the push-off members for moving the push-off members from their position near the centre of the conveying means to one side of the conveying means, so as to discharge objects present on the conveying means in a direction transversely to the longitudinal direction of the conveying means, if desired, and means are provided for supplying, on both sides of the longitudinal centre plane of the conveying means, objects to be conveyed to the upstream end of the conveying means.

Such a conveyor is disclosed in EP-A-0084905. In said known structure from two push-off members succeeding each other one can be displaced only in one direction and the other in the opposite direction transversely to the longitudinal direction of the conveying means so that two succeeding push-off members moving in the same direction are situated at a distance from each other.

According a first aspect of the invention a guide means can be adjusted from a middle position wherein a cam means can pass said guide means without bringing about a displacement of the push-off member supporting said cam means to a side of the conveyor into two opposite directions toward a second position or a third position, the arrangement being such that in said second position the guide means and a cam means co-operate for guiding the push-off member supporting said cam means towards one side of the conveying means and in said third position the guide means and the cam means co-operate for guiding the push-off member supporting said cam means towards the opposite side of the conveying means.

According a second aspect of the invention, when seen in the longitudinal direction of the conveying means, two rows of push-off members located side by side are provided, whereby said push-off members from the one row can be steered from their position near the centre of the conveying means to the one side and the push-off members from the other row can be steered from a position near the centre of the conveying means to the other side of said conveying means.

In many cases a preselection can be carried out in a simple manner, prior to supplying the objects to be handled to the endless conveying means, between objects which are to be discharged towards the one side of the conveying means and objects which are to be discharged towards the other side of the conveying means. With the construction according to the invention these objects can be supplied to the conveying means in parallel rows and be pushed off the conveying means by the push-off members. By using the construction according to the invention a considerable capacity increase of the conveyor can be realized, using simple means.

The invention will be explained in more detail hereafter with reference to a few possible embodiments of the construction according to the invention diagrammatically illustrated in the accompanying Figures.

Figure 1 is a perspective view of a conveyor according to the invention.

Figure 2 is a larger-scale view of the guide means, by means of which the push-off members can be steered from a position near the centre of the conveying means to a position near the side of the conveying means in question.

Figure 3 is a larger scale view of means, by which a push-off member located near one side of the conveying means can be returned to a position near the centre of the conveying means.

Figure 4 shows a modified embodiment of the conveyor shown in Figure 1.

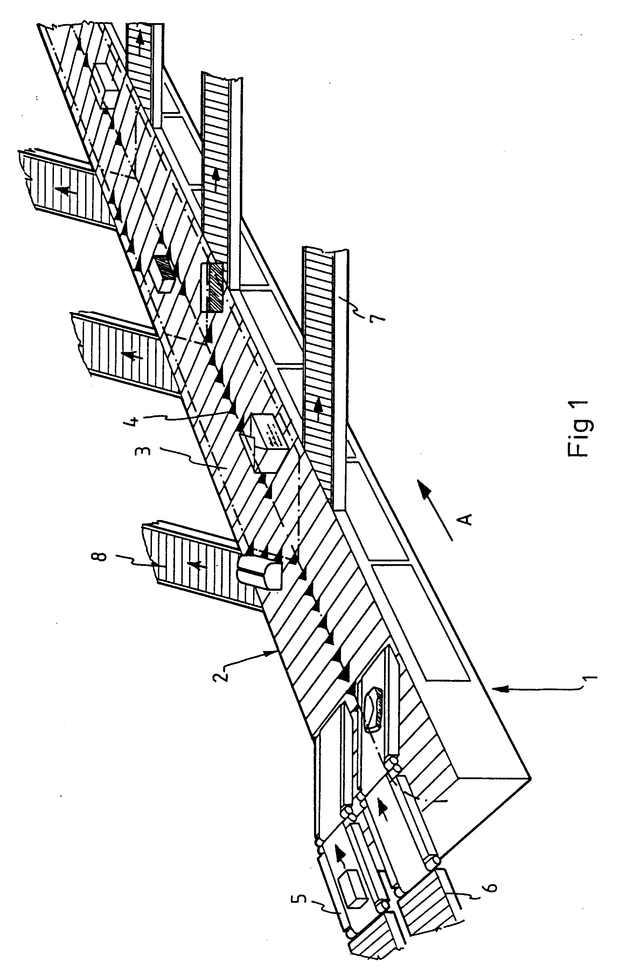

Figure 1 diagrammatically shows a conveyor 1, which is provided with an endless drivable conveying means 2, which is built up, in a manner known per se, of a plurality of carriers 3 extending transversely to the longitudinal direction, push-off members 4 being movable along said conveying means. During operation the conveying means will be moved, by means not shown, in the direction indicated by the arrow A.

In the illustrated embodiment two supply conveyors 5 and 6 located side by side adjoin the upstream end of the conveying means 2. As will be apparent from Figure 1, objects can be supplied to the conveying means 2 by means of the two supply conveyors 5 and 6, in such a manner that the objects supplied by the supply conveyor 5 are delivered near the one side of the conveying means 2 and the objects supplied by the supply conveyor 6 are delivered near the other side of the conveying means 2.

As will furthermore be apparent from Figure 1 it has been arranged with the conveyor according to the invention, by means to be described in more detail hereafter, that at the upstream end of the conveying means 2 all push-off members 4 are located near the longitudinal centre plane of the conveying means 2, i.e. near the centres of the carriers 3 supporting the push-off members 4 in question.

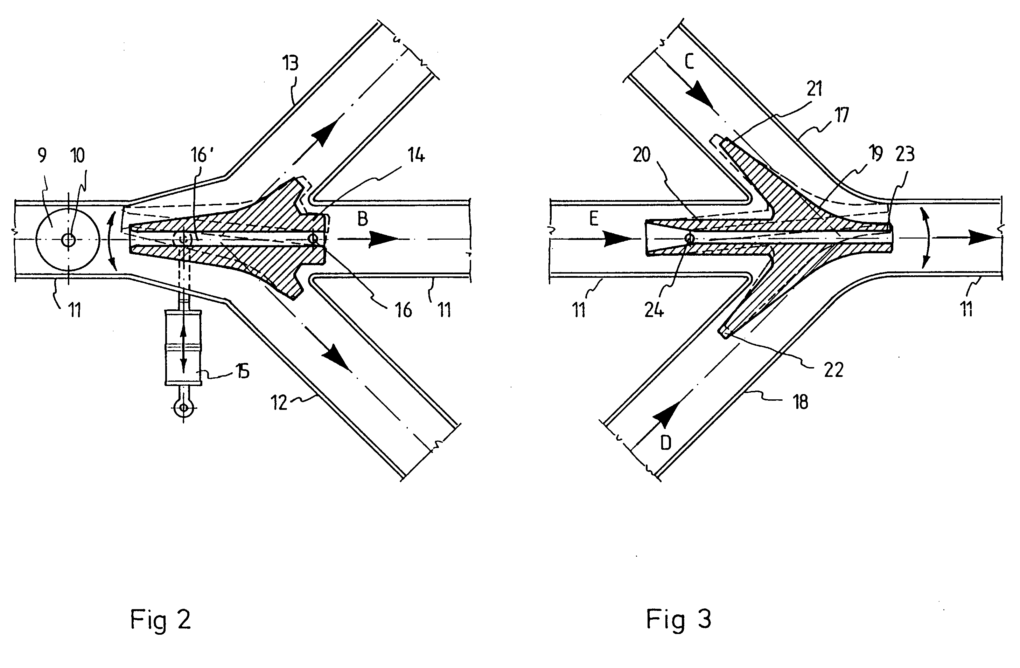

As is furthermore shown in Figure 1, discharge conveyors 7 and 8 respectively adjoin the two sides of the conveyor 1. Near the discharge conveyors 7 and 8 means, diagrammatically illustrated in Figure 2, are provided, by means of which the push-off members can be moved along the carriers 3 in question, towards the side adjoined by the discharge conveyors 7 or towards the side adjoined by the discharge conveyors 8, so as to push objects present on the conveying means 2, in a manner known per se, in the direction of the respective discharge conveyors 7 and 8, in order to further discharge the objects in question by means of said discharge conveyors 7 or 8.

As is diagrammatically indicated in Figure 2, each push-off member 4 is connected to a guide wheel 9, located under the respective carrier 3 and being rotatable about a vertical axis of rotation, and to a guide pin 10 disposed in concentric relationship with said wheel.

When a push-off member 4 is located near the centre of the conveying means, the push-off member 4 in question is guided by means of a guide rail 11 extending in the longitudinal direction of the conveying means and accommodating said wheel 9.

Near the discharge stations, i.e. near the locations where the objects displaced by the conveying means are to be steered in the direction of a discharge conveyor 7 or 8, auxiliary guide rails 12 and 13 respectively, extending in the direction of the respective discharge conveyors 7 and 8, adjoin the guide rail 11.

An switch tongue 14, which is more or less triangular when seen in plan view, is disposed near an intersection point between the guide rails 11 - 13, said switch tongue being pivotable, by means of a setting cylinder 15, about a vertical pivot pin 16.

In the position of the switch tongue 14 shown in full lines the guide pin 10 will be able to move through a guide channel 16' extending in the longitudinal direction of the switch tongue, so that the wheel 9 will pass the intersection between the guide rails 11 - 13 without leaving the guide rail 11 thereby, as is indicated by means of the arrow B. When on the other hand the switch tongue 14 is pivoted upwards by the setting cylinder 15, into the position shown in dotted lines, the guide pin 10 will come into contact with the bottom side of the switch tongue 14, when seen in Figure 2, so that the guide wheel 9 is guided from the rail 11 into the rail 12, and the push-off member connected to the guide wheel 9 is pushed towards one side of the conveying means 2 in a corresponding manner, whilst taking along an object present on the conveying means.

When on the other hand the switch tongue 14 is pivoted downwards, when seen in Figure 2, by means of a setting cylinder 15, the guide wheel will be guided towards the guide rail 13 in a similar manner.

The guide wheels 9 of the push-off members guided to one side of the conveying means will furthermore be guided in the longitudinal direction of the conveying means by guide rails (not shown) extending along the sides of the conveying means.

Guide rails 17 and 18, which extend obliquely towards each other, adjoin the ends of the guide rails extending along the sides of the conveyor near the downstream end of the conveying means, said guide rails 17 and 18 adjoining the guide rail disposed near the centre of the conveyor, as is illustrated in Figure 3. A guide means 19 is provided near the point where the guide rails 17 and 18 adjoin the central guide rail 11, said guide means 19 comprising an elongated central part 20 extending at least substantially in the longitudinal direction of the guide rail, as well as two wings 21 and 22 adjoining said central part and extending into the guide rails 17 and 18 respectively.

A guide channel 23 for the guide pin 10, extending in the longitudinal direction of said central part, is provided in the central part 20 of the guide means 19, the upstream end of said guide channel diverging in a direction opposed to the direction of movement of the guide pins.

The guide means 19 is furthermore pivotable about a vertically upright pivot pin 24 located near the upstream end of said guide means.

From Figure 3 it will be apparent that a guide pin 10 of a guide wheel moving through the guide rail 17 in the direction indicated by the arrow C will come into contact with the upper surface of the wing 21, when seen in Figure 3, and thereby send the guide wheel in question into the downstream end of the guide rail 11, as a result of which the guide means 19 will be slightly pivoted from its central position shown in full lines.

In a similar manner the guide pin 10 of a guide wheel moving through the guide rail 18 in the direction indicated by the arrow D will come into contact with the bottom side of the guide means 19, when seen in Figure 3, and be guided into the downstream part of the guide rail 11. The guide pins of the guide rollers moving through the guide rail 11, in the direction indicated by the arrow E, move through the elongated recess 23. As a result of the bell-mouthed shape of the upstream end of the recess 23 the guide pin 10 of a guide wheel 9 moving through the channel 11 will run into the recess 23 even when the guide means 19 is pivoted from its central position.

It will be apparent that it can be effected, by the guide means shown in Figure 3, that at the downstream end of the conveying means all push-off members 4 are disposed near the centre of the conveying means 2 again.

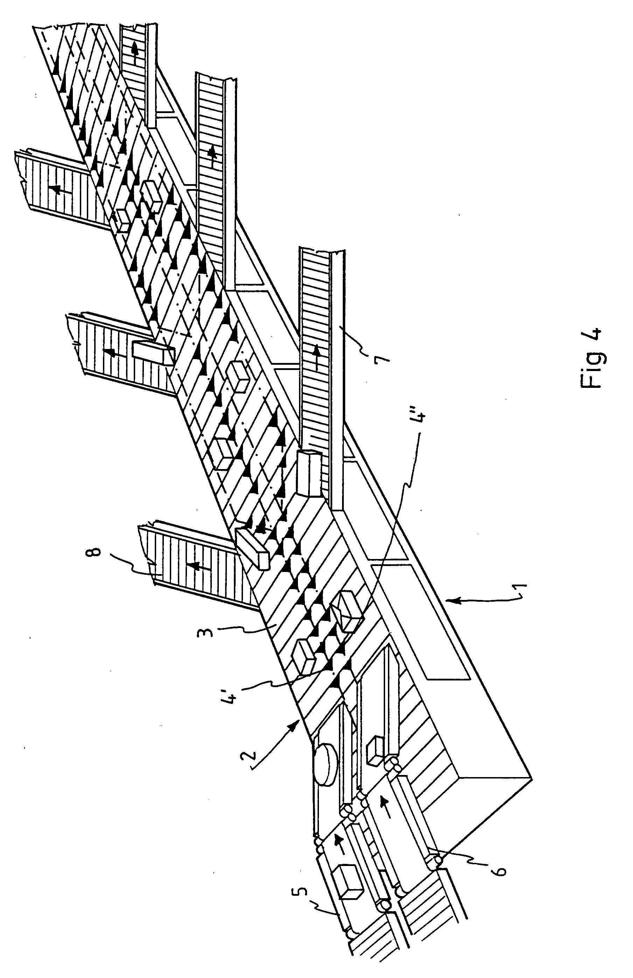

The embodiment of the conveyor according to the invention shown in Figure 4 at least substantially corresponds with the above-described embodiment of the conveyor according to the invention. Consequently like parts are numbered alike in the various Figures.

As will be apparent from Figure 4 two rows of push-off members 4' and 4'' located side by side are provided on the carrier in this alternative embodiment. From their position near the centre of the conveying means the push-off members 4' can only be steered in the direction of the side adjoined by the discharge conveyors 8 thereby, whilst the push-off members 4'' can only be steered to the side of the conveying means adjoined by the discharge conveyors 7. Said steering of the push-off members 4'' is thereby preferably carried out by switch means, which can be controlled independently of the switch means steering the push-off members 4', so that at a certain discharge point objects can be simultaneously steered to the one side as well as to the other side, if desired.

Although in the above embodiments the discharge conveyors 7 and 8 arranged on either side of a conveyor are respectively disposed in pairs at one location, it will be apparent that the discharge conveyors arranged on either side of the conveyor may also be staggered with respect to each other.

## Claims

1. A conveyor (1) provided with a frame and with an endless drivable conveying means (2) equipped with parallel carriers (3) extending transversely to the direction of movement of the conveying means (2), said carriers (3) being pivotally coupled to at least one endless flexible coupling means, at least some of the carriers (3) supporting push-off members (4), which can be moved along the carriers (3) in question, the conveyor being also provided with guide means (19) for the push-off members by means of which it is effected that at the upstream end of the conveying means the push-off members are disposed near the centre of the conveying means (2), whilst near, and ahead of, discharge stations (7, 8) guide means (14) are provided cooperating with cam means (10) mounted on the push-off members (4) for moving the push-off members from their position near the centre of the conveying means (2) to a side of the conveying means (2), so as to discharge objects present on the conveying means (2) in a direction transversely to the longitudinal direction of the conveying means (2), if desired, and means (5, 6) are provided for supplying, on both sides of the longitudinal centre plane of the conveying means (2), objects to be conveyed to the upstream end of the conveying means (2), characterised in that the guide means (14) can be adjusted from a middle position wherein a cam means (10) can pass said guide means (14) without bringing about a displacement of the push-off member (4) supporting said cam means to a side of the conveyor into two opposite directions toward a second position or a third position the arrangement being such that in said second position the guide means (14) and a cam means (10) co-operate for guiding the push-off member (4) supporting said cam means (10) towards one side of the conveying means and in said third position the guide means (14) and the cam means (10) co-operate for guiding the push-off member (4) supporting said cam means towards the opposite side of the conveying means.

2. A conveyor as claimed in claim 1, characterised in that the guide means (14) has a substantially triangular shape when seen in plan view and has been arranged in such a way that the base of said triangular guide means (14) is situated downstream when seen in the direction of movement of the carriers (3) whereby a cam means formed by a guide pin (10) in the middle position of the triangular guide means (14) can pass through a guide channel (16') in the triangular means, whilst when said triangular guide means (14) has been pivoted about a pivot axis (16) situated at its downstream end into the second or the third position the guide pin (10) moves along a side of said triangular guide means (14).

3. A conveyor (1) provided with a frame and with an endless drivable conveying means (2) equipped with parallel carriers (3) extending transversely to the direction of movement of the conveying means (2), said carriers (3) being pivotally coupled to at least one endless flexible coupling means, at least some of the carriers (3) supporting push-off members (4), which can be moved along the carriers (3) in question, the conveyor being also provided with guide means (19) for the push-off members by means of which it is effected that at the upstream end of the conveying means the push-off members are disposed near the centre of the conveying means (2), whilst near, and ahead of, discharge stations (7, 8) guide means (14) are provided co-operating with cam means (10) mounted on the push-off members (4) for moving the push-off members from their position near the centre of the conveying means (2) to a side of the conveying means (2), so as to discharge objects present on the conveying means (2) in a direction transversely to the longitudinal direction of the conveying means (2), if desired, and means (5, 6) are provided for supplying, on both sides of the longitudinal centre plane of the conveying means (2), objects to be conveyed to the upstream end of the conveying means (2), characterised in that when seen in the longitudinal direction of the conveying means (2), two rows of push-off members (4', 4'') located side by side are provided, whereby said push-off members (4') from the one row can be steered from their position near the centre of the conveying means (2) to the one side and the push-off members (4'') from the other row can be steered from a position near the centre of the conveying means to the other side of said conveying means.

4. A conveyor according claim 3, characterised in that the push-off members (4') of the one row can be steered independently of the push-off members (4'') of the other row.

5. A conveyor according to any preceding claim characterised in that two separate supply conveyors (5, 6) adjoin the upstream end of the conveying means (2) side by side.

## Patentansprüche

1. Förderer (1) mit einem Rahmen und mit einer antreibbaren Endlosfördereinrichtung (2), die mit parallelen Trägern (3) versehen ist, die sich quer zur Bewegungsrichtung der Fördereinrichtung (2) erstrecken und schwenkbar mit mindestens einer flexiblen Endloskopplungseinrichtung verbunden sind, wobei mindestens einige der Träger (3) Abstoßelemente (4) lagern, die entlang den in Rede stehenden Trägern (3) bewegt werden können, und mit Führungseinrichtungen (19) für die Abstoßelemente, mit Hilfe derer erreicht wird, daß am aufstromseitigen Ende der Fördereinrichtung die Abstoßelemente in der Nähe der Mitte der Fördereinrichtung (2) angeordnet sind, während in der Nähe und aufstromseitig von Abgabestationen (7, 8) Führungseinrichtungen (14) vorgesehen sind, die mit an den Abstoßelementen (4) montierten Nockeneinrichtungen (10) zusammenwirken, um die Abstoßelemente aus ihrer Position in der Nähe der Mitte der Fördereinrichtung (2) zu einer Seite der Fördereinrichtung (2) zu bewegen und auf der Fördereinrichtung (2) vorhandene Gegenstände in einer Richtung quer zur Längsrichtung der Fördereinrichtung (2) abzugeben, falls gewünscht, wobei Einrichtungen (5, 6) vorgesehen sind, um zu fördernde Gegenstände auf beiden Seiten der Längsmittelebene der Fördereinrichtung (2) dem aufstromseitigen Ende der Fördereinrichtung (2) zuzuführen, dadurch gekennzeichnet, daß die Führungseinrichtung (14) von einer Mittelposition aus, in der eine Nockeneinrichtung (10) die Führungseinrichtung (14) passieren kann, ohne eine Verschiebung des die Nockeneinrichtung lagernden Abstoßelementes (4) zu einer Seite des Förderers zu bewirken, in zwei entgegengesetzte Richtungen in eine zweite Position oder eine dritte Position verstellt werden kann, wobei in der zweiten Position die Führungseinrichtung (14) und eine Nockeneinrichtung (10) Zusammenwirken, um das die Nockeneinrichtung (10) lagernde Abstoßelement (4) zu einer Seite der Fördereinrichtung zu führen, und in der dritten Position die Führungseinrichtung (14) und die Nockeneinrichtungen (10) zusammenwirken, um das die Nockeneinrichtung lagernden Abstoßelement (4) zur gegenüberliegenden Seite der Fördereinrichtung zu führen.

2. Förderer nach Anspruch 1, dadurch gekennzeichnet, daß die Führungseinrichtung (14) in der Draufsicht eine im wesentlichen dreieckförmige Gestalt besitzt und derart angeordnet ist, daß sich die Basis der dreieckförmigen Führungseinrichtung (14) in der Bewegungsrichtung der Träger (3) abstromseitig befindet, so daß eine durch einen Führungsstift (10) gebildete Nockeneinrichtung in der mittleren Position der dreieckförmigen Führungseinrichtung (14) einen Führungskanal (16') in der dreieckförmigen Einrichtung passieren kann, während sich der Führungsstift (10) entlang einer Seite der dreieckförmigen Führungseinrichtung (14) bewegt, wenn die dreieckförmige Führungseinrichtung (14) um eine an ihrem abstromseitigen Ende angeordnete Schwenkachse (16) in die zweite oder dritte Position verschwenkt worden ist.

3. Förderer (1) mit einem Rahmen und mit einer antreibbaren Endlosfördereinrichtung (2), die mit parallelen Trägern (3) versehen ist, welche sich quer zur Bewegungsrichtung der Fördereinrichtung (2) erstrecken und schwenkbar mit mindestens einer flexiblen Endloskopplungseinrichtung gekoppelt sind, wobei mindestens einige der Träger (3) Abstoßelemente (4) lagern, die entlang den in Rede stehenden Trägern (3) bewegt werden können, und mit Führungseinrichtungen (19) für die Abstoßelemente, mit Hilfe derer erreicht wird, daß die Abstoßelemente am aufstromseitigen Ende der Fördereinrichtung in der Nähe der Mitte der Fördereinrichtung (2) angeordnet sind, während in der Nähe und aufstromseitig von Abgabestationen (7, 8) Führungseinrichtungen (14) vorgesehen sind, die mit an den Abstoßelementen (4) montierten Nockeneinrichtungen (10) zusammenwirken und die Abstoßelemente aus ihrer Position in der Nähe der Mitte der Fördereinrichtung (2) zu einer Seite der Fördereinrichtung (2) bewegen, um auf der Fördereinrichtung (2) vorhandene Gegenstände in einer Richtung quer zur Längsrichtung der Fördereinrichtung (2) abzugeben, falls gewünscht, und wobei Einrichtungen (5, 6) vorgesehen sind, um zu fördernde Gegenstände auf beiden Seiten der Längsmittelebene der Fördereinrichtung (2) zum aufstromseitigen Ende der Fördereinrichtung (2) zu führen, dadurch gekennzeichnet, daß in Längsrichtung der Fördereinrichtung (2) gesehen zwei Reihen von Seite an Seite angeordneten Abstoßelementen (4', 4'') vorgesehen sind, wobei die Abstoßelemente (4') der einen Reihe aus ihrer Position in der Nähe der Mitte der Fördereinrichtung (2) zu der einen Seite hin und die Abstoßelemente (4'') der anderen Reihe aus einer Position in der Nähe der Mitte der Fördereinrichtung zu der anderen Seite der Fördereinrichtung hin gelenkt werden können.

4. Förderer nach Anspruch 3, dadurch gekennzeichnet, daß die Abstoßelemente (4') der einen Reihe unabhängig von den Abstoßelementen (4'') der anderen Reihe gelenkt werden können.

5. Förderer nach einem der vorangehenden Ansprüche, dadurch gekennzeichnet, daß zwei separate Zuführförderer (5, 6) Seite an Seite an das aufstromseitige Ende der Fördereinrichtung (2) angeschlossen sind.

## Revendications

1. Transporteur (1) muni d'un châssis et d'un moyen d'acheminement sans fin (2) pouvant être entraîné équipé de bandes de transport parallèles (3) s'étendant transversalement à la direction de déplacement du moyen d'acheminement (2), lesdites bandes de transport (3) étant reliées, de manière à pouvoir pivoter, à au moins un moyen de connexion souple sans fin, au moins certaines des bandes de transport (3) supportant des éléments formant butée (4), qui peuvent être déplacés le long des bandes de transport (3) en question, le transporteur étant également muni d'un moyen de guidage (19) pour les éléments formant butée au moyen desquels il se passe qu'au niveau de l'extrémité amont du moyen d'acheminement, les éléments formant butée sont disposés près du centre du moyen d'acheminement (2), tandis que près et en avant des stations de déchargement (7, 8), des moyens de guidage (14) sont prévus pour fonctionner avec un moyen formant came (10) monté sur les éléments formant butée (4) pour déplacer les éléments formant butée de leur position près du centre du moyen d'acheminement (2) vers un côté du moyen d'acheminement (2), de façon à décharger des objets présents sur le moyen d'acheminement (2) dans une direction transversale par rapport à la direction longitudinale du moyen d'acheminement (2), si on le souhaite, et des moyens (5, 6) sont prévus pour délivrer, sur les deux côtés du plan central longitudinal du moyen d'acheminement (2), des objets à transporter vers l'extrémité amont du moyen d'acheminement (2), caractérisé en ce que le moyen de guidage (14) peut être ajusté à partir d'une position médiane dans laquelle un moyen formant came (10) peut passer ledit moyen de guidage (14) sans amener un déplacement de l'élément formant butée (4) supportant ledit moyen formant came vers un côté du transporteur dans deux directions opposées vers une seconde position ou vers une troisième position, l'agencement étant tel que dans ladite seconde position, le moyen de guidage (14) et un moyen formant came (10) fonctionnent ensemble pour guider l'élément formant butée (4) supportant ledit moyen formant came (10) vers un côté du moyen d'acheminement, et dans ladite troisième position, le moyen de guidage (14) et le moyen formant came (10) fonctionnent ensemble pour guider l'élément formant butée (4) supportant ledit moyen formant came vers le côté opposé du moyen d'acheminement.

2. Transporteur selon la revendication 1, caractérisé en ce que le moyen de guidage (14) a une forme sensiblement triangulaire lorsque vu dans une vue en plan et en ce qu'il a été disposé de façon que la base dudit moyen de guidage triangulaire (14) soit située en aval lorsque vue dans la direction de déplacement des bandes de transport (3) de sorte qu'un moyen formant came formé par un ergot de guidage (10) dans la position médiane du moyen de guidage triangulaire (14) puisse passer à travers un canal de guidage (16') dans le moyen triangulaire, tandis que lorsque ledit moyen de guidage triangulaire (14) a été pivoté autour d'un axe de pivot (16) situé à son extrémité aval dans la seconde ou dans la troisième position, l'ergot de guidage (10) se déplace le long d'un côté dudit moyen de guidage triangulaire (14).

3. Transporteur (1) muni d'un châssis et d'un moyen d'acheminement sans fin pouvant être entraîné (2) équipé de bandes de transport parallèles (3) s'étendant transversalement à la direction de déplacement du moyen d'acheminement (2), lesdites bandes de transport (3) étant reliées, de manière à pouvoir pivoter, à au moins un moyen de connexion souple sans fin, au moins certaines des bandes de transport (3) supportant des éléments formant butée (4), qui peuvent être déplacés le long des bandes de transport (3) en question, le transporteur étant également muni d'un moyen de guidage (19) pour les éléments formant butée au moyen desquels il se passe qu'au niveau de l'extrémité amont du moyen d'acheminement, les éléments formant butée sont disposés près du centre du moyen d'acheminement (2), tandis que près et en avant des stations de déchargement (7, 8), des moyens de guidage (14) sont prévus pour fonctionner avec un moyen formant came (10) monté sur les éléments formant butée (4) pour déplacer les éléments formant butée de leur position près du centre du moyen d'acheminement (2) vers un côté du moyen d'acheminement (2), de façon à décharger des objets présents sur le moyen d'acheminement (2) dans une direction transversale par rapport à la direction longitudinale du moyen d'acheminement (2), si on le souhaite, et des moyens (5, 6) sont prévus pour délivrer, sur les deux côtés du plan central longitudinal du moyen d'acheminement (2), des objets à transporter vers l'extrémité amont du moyen d'acheminement (2), caractérisé en ce que deux rangées d'éléments formant butée (4', 4''), situées côte à côte, sont prévues, lorsque vues dans la direction longitudinale du moyen d'acheminement (2), de sorte que lesdits éléments formant butée (4'), d'une rangée, peuvent être dirigés depuis leur position près du centre du moyen d'acheminement (2) vers un côté, et de sorte que les éléments formant butée (4''), de l'autre rangée, peuvent être dirigés depuis une position près du centre du moyen d'acheminement vers l'autre côté dudit moyen d'acheminement.

4. Transporteur selon la revendication 3, caractérisé en ce que les éléments formant butée (4') d'une rangée peuvent être orientés indépendamment des éléments formant butée (4'') de l'autre rangée.

5. Transporteur selon l'une quelconque des revendications précédentes, caractérisé en ce que deux transporteurs d'alimentation séparés (5, 6), côte à côte, rejoignent l'extrémité amont du moyen d'acheminement (2).
